(19) **Europäisches Patentamt**
**European Patent Office**
**Office européen des brevets**

(11) **EP 1 331 300 B1**

(12) **EUROPÄISCHE PATENTSCHRIFT**

(45) Veröffentlichungstag und Bekanntmachung des Hinweises auf die Patenterteilung:
**21.03.2007 Patentblatt 2007/12**

(51) Int Cl.:
*D06F 37/20* (2006.01)    *D06F 37/30* (2006.01)

(21) Anmeldenummer: **02028446.9**

(22) Anmeldetag: **19.12.2002**

(54) **Waschmaschine mit Antriebssystem**

Washing machine with a drive system

Machine à laver avec système d'entraînement

(84) Benannte Vertragsstaaten:
**AT BE BG CH CY CZ DE DK EE ES FI FR GB GR IE IT LI LU MC NL PT SE SI SK TR**

(30) Priorität: **23.01.2002 DE 10202352**

(43) Veröffentlichungstag der Anmeldung:
**30.07.2003 Patentblatt 2003/31**

(73) Patentinhaber: **Miele & Cie. KG**
**33332 Gütersloh (DE)**

(72) Erfinder: **Ulrich, Martin**
**33378 Rheda-Wiedenbrück (DE)**

(56) Entgegenhaltungen:
**EP-A- 1 167 611**      **WO-A-00/28128**
**DD-A1- 151 234**      **DE-A1- 3 342 376**
**DE-A1- 19 918 331**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine Waschmaschine mit einer Trommel, welche durch ein Antriebssystem mit verschiedenen, von einer Steuereinrichtung vorgegebenen programm- und/oder zustandsabhängigen Drehzahlen antreibbar ist, wobei das Antriebssystem einen Motor, ein Stellglied zur Bestromung des Motors in Abhängigkeit von von der Steuereinrichtung vorgegebenen Solldrehzahlen, eine Messeinrichtung zur Erfassung der Istdrehzahlen und einen Drehzahlregler beinhaltet.

Eine Waschmaschine dieser Art ist beispielsweise aus der DE 199 18 331 A1 bekannt. Bei der Steuerung von Antriebssystemen muss generell in jedem Fall gewährleistet sein, dass die Motoren und die von ihnen bewegten Lasten nicht zu hoch beschleunigt werden. Bei Waschmaschinen ist eine solche Begrenzung insbesondere im Schleuderbetrieb notwendig, da sich aufgrund schlechter Wäscheverteilung in der Trommel Unwuchten ausbilden und diese bei zu starker Beschleunigung zu starken Schwingungen und damit zum Versatz des Waschautomaten oder zu einer Beschädigung der Maschinenelemente führen können. Außerdem gilt es, eine Überlast der Antriebskomponenten zu vermeiden, da diese eine Zerstörung der Halbleiter durch Überstrom oder bei Kollektormotoren einen übermäßigen Kohleverschleiß verursacht. Auch die Komponenten, die die Antriebskraft vom Motor auf die Trommel übertragen, müssen insbesondere beim Anlauf geschützt werden. Ansonsten ist beispielsweise bei Riementrieben eine Beschädigung der Kerbverzahnung, ein Lösen der Riemenscheibe oder ein Keilriemenschlupf möglich.

Die vorhandene Programmstruktur, die für die einzelnen Waschprogramme in der Programmsteuerung der Waschmaschine hinterlegt ist und als Steuereinrichtung die Solldrehzahlen vorgibt, kann diese Anforderungen nicht in jedem Fall sicherstellen:

- Verschiedenartige Antriebe wie Kollektormotoren, Asynchronmotoren u. ä. oder unterschiedliche Reglerparametrierungen und dadurch verändertes Beschleunigungsverhalten werden grundsätzlich nicht berücksichtigt.

- Eine Hardware-Strombegrenzung, beispielsweise ein Shunt, bei dem der Spannungsabfall durch eine nachgeschaltete Elektronik ausgewertet wird, gewährleistet zwar den Schutz der Elektronikkomponenten des Stellglieds, führt jedoch bei zu hoher Beschleunigung zum Programmabbruch.

- Beim Durchfahren des kritischen Drehzahlbereichs von Waschmaschinen mit schwingend gelagerten Laugenbehältern (Resonanz des Feder-Masse-Systems bestehend aus den Federn und der Masse des gefüllten Laugenbehälters ) soll eine möglichst hohe Beschleunigung erreicht werden, um die damit verbundene Belastung auf einen kurzen Zeitraum zu begrenzen. Die hohe Beschleunigung kann in anderen Drehzahlbereichen, beispielsweise beim Anlauf des Motors, nachteilig sein, weil Anlaufstromspitzen und Drehmomentstöße auftreten. Die Drehmomentstöße führen zu einer Belastung der Kraftübertragungselemente Motor - Trommel.

- Bei bekannten Waschmaschinen, beispielsweise bei einer von der Anmelderin hergestellten und vertriebenen Waschmaschine W 377, wird bei einem Netzausfall der aktuelle Programmstatus in einem $E^2PROM$ abgespeichert. Erfolgt ein solcher Netzausfall während des Schleuderns, wird das Programm bei Netzwiederkehr mit der hohen Schleuderdrehzahl als Sollwert fortgesetzt. Dies führt zu einer extremen Beschleunigung.

Der Erfindung stellt sich somit das Problem, bei einer Waschmaschine der eingangs genannten Art auf einfache Weise eine Überbelastung des Antriebssystems durch zu hohe Beschleunigungswerte in den verschiedenen Programmabschnitten bzw. den darin verwendeten Beschleunigungsphasen zu vermeiden.

Erfindungsgemäß wird dieses Problem durch die Merkmale des unabhängigen Anspruchs 1 gelöst. Somit ist der Steuereinrichtung ein Anstiegsbegrenzer mit variabler, umschaltbarer Begrenzungsfunktion nachgeschaltet, durch welchen die Solldrehzahlen hinsichtlich ihrer Beschleunigung in Abhängigkeit von den von der Messeinrichtung erfassten Istdrehzahlen begrenzbar sind.

Die mit der Erfindung erreichbaren Vorteile ergeben sich dadurch, dass die Funktion des Anstiegsbegrenzers unabhängig von der vorhandenen Programmstruktur ist, die für die einzelnen Waschprogramme in der Programmsteuerung der Waschmaschine hinterlegt ist und als Steuereinrichtung die Solldrehzahlen vorgibt. Hierdurch bedingt wird die Kompatibilität von Steuerprogrammen für verschiedene Antriebskonzepte und Lasten erhöht, da deren Eigenschaften nicht mehr in der in diesen Programmen hinterlegten Verfahrenstechnik berücksichtigt werden muss. Unzulässige Beschleunigungswerte in einzelnen Programmabschnitten oder Programmzuständen werden zuverlässig erkannt und korrigiert.

In einer vorteilhaften Ausführungsform ist dem Anstiegsbegrenzer ein Tiefpass nachgeschaltet. Dies führt zu weicheren Drehzahlübergängen in den Umschaltbereichen.

Ein Ausführungsbeispiel der Erfindung ist in den Zeichnungen rein schematisch dargestellt und wird nachfolgend näher beschrieben. Es zeigt

Figur 1    ein Blockschaltbild des Antriebssystems einer Waschmaschinentrommel mit einem Anstiegsbegrenzer

Figur 2    die Begrenzungskennlinie des Anstiegsbegrenzers

Figur 3 den Soll-Drehzahlverlauf eines Waschprogramms als Drehzahl-Zeitdiagramm

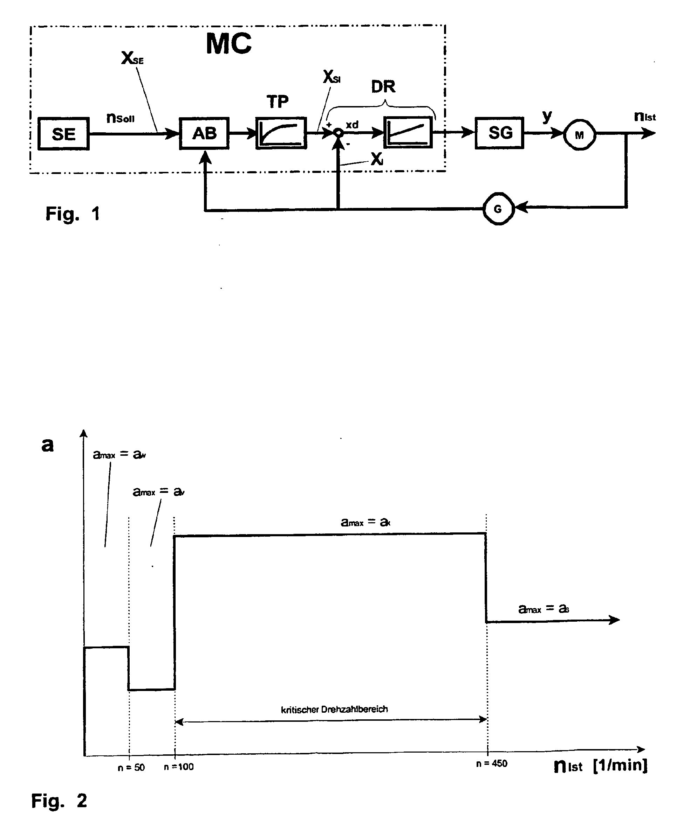

Das in Figur 1 dargestellte Antriebssystem für die Trommel (nicht dargestellt) einer Waschmaschine (ebenfalls nicht dargestellt) beinhaltet einen Motor (M), dessen Drehmoment in bekannter Weise entweder durch Direktankopplung oder über einen Riementrieb (beides nicht dargestellt) auf die Trommelwelle übertragen wird. Eine Drehzahl-Messeinrichtung, beispielsweise ein mit der Motorwelle gekoppelter Tachogenerator (G) wandelt die Istdrehzahlen $n_{ist}$ in Spannungssignale (Regelgröße $x_i$) um. Bei Direktankopplung des Motors (M) entspricht die Motordrehzahl der Trommeldrehzahl, bei Verwendung von Riementrieben ist das Übersetzungsverhältnis einzurechnen. Um die Trommel mit verschiedenen programm- und/oder zustandsabhängigen Drehzahlen von ca. 30 min$^{-1}$ im Waschbetrieb bis ca. 1800 min$^{-1}$ im Schleuderbetrieb antreiben zu können, gibt die in der Programmsteuerung integrierte Steuereinrichtung (SE) externe Sollwerte $X_{SE}$ vor, die Solldrehzahlen $n_{soll}$ in der gewünschten Größe entsprechen. Diese externen Sollwerte werden von einem Anstiegsbegrenzer (AB), dessen Funktion später beschrieben ist, und einem nachgeschalteten Tiefpass (TP) in interne Sollwerte $X_{SI}$ umgewandelt und einer Summierstelle zugeführt. Das Ausgangssignal des Tachogenerators (G) wird an den negativen Eingang der Summierstelle und an den Anstiegsbegrenzer (AB) gelegt. Damit entspricht das Ausgangssignal der Summierstelle der Regeldifferenz $x_d$ zwischen Solldrehzahl und Istdrehzahl. Sie wird dem Drehzahlregler (DR) zugeführt. Der Drehzahlregler (DR) beeinflusst über das Stellglied (SG) den Motorstrom als Stellgröße y. Anstiegsbegrenzer (AB) und Drehzahlregler (DR) können in der Programmsteuerung (MC) der Waschmaschine integriert sein, das Stellglied in einem Leistungsteil (nicht dargestellt). Beispielsweise bei Fequenzumrichter-gesteuerten Antrieben ist ebenfalls denkbar, dass sich Anstiegsbegrenzer, Drehzahlregler und Stellglied in einer separaten Einheit (auf dem Umrichter) befinden.

Der Anstiegsbegrenzer (AB) begrenzt die Solldrehzahlen hinsichtlich ihrer Beschleunigung in Abhängigkeit vom Ausgangssignal des Tachogenerators (G), welches den Istdrehzahlen entspricht. Figur 2 zeigt die Begrenzungskennlinie des Anstiegsbegrenzers als Beschleunigungs-Drehzahl-Kennlinie

$$a_{max} = f(n_{ist}).$$

Im Waschbetrieb bei Drehzahlen bis 50 min$^{-1}$ wird die Beschleunigung auf einen Wert $a_w$ begrenzt. Anschließend erfolgt während der Verteildrehzahlen, die zwischen 50 min$^{-1}$ und 100 min$^{-1}$ liegen, eine Begrenzung auf eine Beschleunigung $a_v$, die von $a_w$ verschieden sein kann. Im kritischen Drehzahlbereich von 100 min$^{-1}$ bis

450 min$^{-1}$ lässt der Anstiegsbegrenzer eine hohe Beschleunigung $a_K$ zu, damit dieser Bereich möglichst schnell durchfahren werden kann. Anschließend wird mit einer geringeren Maximalbeschleunigung $a_s$ bis zum Erreichen der Enddrehzahl beschleunigt.

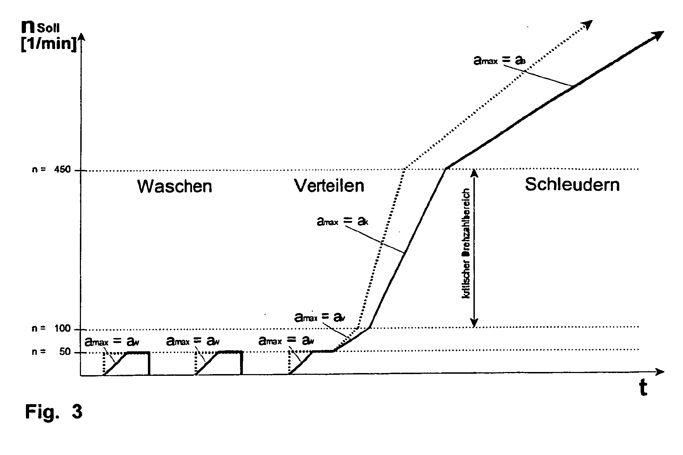

Figur 3 zeigt die Auswirkung des Anstiegsbegrenzers (AB). Hierzu ist in einem Drehzahl-Zeitdiagramm der Soll-Drehzahlverlauf eines Waschprogramms dargestellt. Die gestrichelte Linie zeigt den von der Steuereinrichtung (SE) vorgegebenen externen Sollwert $x_{SE}$, die durchgezogenen Linie den durch den Anstiegsbegrenzer (AB) begrenzten internen Sollwert $x_{SI}$.

**Patentansprüche**

1. Waschmaschine mit einer Trommel, welche durch ein Antriebssystem mit verschiedenen, von einer Steuereinrichtung (SE) vorgegebenen programm- und/oder zustandsabhängigen Drehzahlen antreibbar ist, wobei das Antriebssystem einen Motor (M), ein Stellglied (SG) zur Bestromung des Motors (M) in Abhängigkeit von von der Steuereinrichtung (SE) vorgegebenen Solldrehzahlen ($n_{soll}$, $x_{SE}$), eine Messeinrichtung (G) zur Erfassung der Istdrehzahlen ($n_{ist}$) und einen Drehzahlregler (DR), welcher über das Stellglied (SG) den Motorstrom beeinflußt, beinhaltet,
   **dadurch gekennzeichnet,**
   **dass** der Steuereinrichtung (SE) ein Anstiegsbegrenzer mit variabler, umschaltbarer Begrenzungsfunktion nachgeschaltet (AB) ist, durch welchen die Solldrehzahlen ($n_{soll}$, $x_{SE}$) entsprechenden Signalwerte in ihrem zeitlichen Verlauf so anpassbar sind, dass die am Ausgang des Drehzahlregelkreises sich ausbildende Istdrehzahl ($n_{ist}$) in ihrem zeitlichen Verlauf, das heißt in ihrer Beschleunigung, vorbestimmbare Höchstwerte ($a_{max}$) nicht übersteigt,
   sowie dass die variable, umschaltbare Begrenzungsfunktion von der durch die Messeinrichtung (G) erfassten Istdrehzahl ($n_{ist}$) selbst abhängig auslösbar ist.

2. Waschmaschine mit einem Antriebssystem nach Anspruch 1,
   **dadurch gekennzeichnet,**
   **dass** dem Anstiegsbegrenzer (AB) ein Tiefpass (TP) nachgeschaltet ist.

**Claims**

1. Washing machine having a drum, which is driveable by means of a drive system at different program-dependent and/or condition-dependent speeds that are predetermined by a control device (SE), wherein the drive system includes a motor (M), a control member (SG) for providing the motor (M) with power in dependence on desired speeds ($n_{desired}$, $x_{SE}$) that are predetermined by the control device (SE), a measuring device (G) for detecting the actual speeds ($n_{actual}$) and a speed controlling means (DR), which influences the motor current by means of the control member (SG), **characterised in that** an acceleration limiter (AB) with a variable, reversible limiting function is connected upstream of the control device (SE), by means of which acceleration limiter the time development of the signal values that correspond to desired speeds ($n_{desired}$, $x_{SE}$) are adaptable in such a manner that the time development of the actual speed ($n_{actual}$) at the outlet of the speed controlling circuit, that is to say its acceleration, does not exceed predeterminable maximum values ($a_{max}$), as well as **in that** the variable, reversible limiting function is itself triggerable in an independent manner by the actual speed ($n_{actual}$) detected by means of the measuring device (G).

2. Washing machine having a drive system according to claim 1, **characterised in that** a low-pass filter (TP) is connected upstream of the acceleration limiter (AB).

**Revendications**

1. Machine à laver comprenant un tambour qui peut être entraîné par un système d'entraînement à différentes vitesses de rotation prescrites par un dispositif de commande (SE) en fonction d'un programme et/ou d'états, lequel système d'entraînement inclut un moteur (M), un actionneur (SG) pour alimenter le moteur (M) en fonction de vitesses de rotation de consigne ($n_{soll}$, $x_{SE}$) prescrites par le dispositif de commande (SE), un dispositif de mesure (G) pour saisir les vitesses de rotation réelles ($n_{ist}$) et un régulateur de vitesse de rotation (DR) qui influence le courant de moteur par l'intermédiaire de l'actionneur (SG),

**caractérisée en ce**

**qu'**en aval du dispositif de commande (SE) est placé un limiteur d'augmentation de vitesse (AB) avec fonction de limitation variable commutable, au moyen duquel les valeurs de signal correspondant à des vitesses de rotation de consigne ($n_{soll}$, $x_{SE}$) sont adaptables dans leur variation en fonction du temps de façon que la vitesse de rotation réelle ($n_{ist}$) qui se forme à la sortie du circuit de régulation de vitesse de rotation ne dépasse pas des valeurs maximales prédéterminables ($a_{max}$) dans sa variation en fonction du temps, c'est-à-dire dans son accélération, et que la fonction de limitation variable commutable est elle-même déclenchable en fonction de la vitesse de rotation réelle ($n_{ist}$) saisie par le dispositif de mesure (G).

2. Machine à laver comprenant un système d'entraînement selon la revendication 1,

**caractérisée en ce**

**qu'**un filtre passe-bas (TP) est placé en aval du limiteur d'augmentation de vitesse (AB).

**Fig. 1**

**Fig. 2**

**Fig. 3**